(19)

Europäisches
Patentamt
European
Patent Office
Office européen
des brevets

(11) **EP 4 254 561 A1**

(12) **EUROPEAN PATENT APPLICATION**
published in accordance with Art. 153(4) EPC

(43) Date of publication:
**04.10.2023 Bulletin 2023/40**

(21) Application number: **21897678.5**

(22) Date of filing: **05.11.2021**

(51) International Patent Classification (IPC):
*H01M 4/62* (2006.01)      *H01G 11/06* (2013.01)
*H01G 11/38* (2013.01)     *H01G 11/40* (2013.01)
*H01M 4/13* (2010.01)

(52) Cooperative Patent Classification (CPC):
**H01G 11/06; H01G 11/38; H01G 11/40; H01M 4/13;
H01M 4/62;** Y02E 60/10

(86) International application number:
**PCT/JP2021/040867**

(87) International publication number:
**WO 2022/113703 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.11.2020 JP 2020197555**

(71) Applicant: **Zeon Corporation
Tokyo 100-8246 (JP)**

(72) Inventors:
• **TAKAHASHI, Naoki
Tokyo 100-8246 (JP)**
• **ITO, Yukie
Tokyo 100-8246 (JP)**

(74) Representative: **Maiwald GmbH
Elisenhof
Elisenstraße 3
80335 München (DE)**

(54) **ELECTRODE FOR ELECTROCHEMICAL ELEMENT, AND ELECTROCHEMICAL ELEMENT**

(57)     An electrode for an electrochemical device having excellent flexibility includes an electrode mixed material layer that contains an electrode active material, a conductive material, and a binder. The conductive material includes a fibrous conductive material. The proportional content of the fibrous conductive material in the electrode mixed material layer is not less than 0.3 mass% and not more than 1.5 mass%. The binder includes a polymer A that includes a nitrile group-containing monomer unit and an alkylene structural unit and that has a Mooney viscosity ($ML_{1+4}$, 100°C) of not less than 70 and not more than 150. The polymer A is contained in the electrode mixed material layer in a proportion of not less than 50 parts by mass and not more than 200 parts by mass per 100 parts by mass of the fibrous conductive material.

EP 4 254 561 A1

**Description**

TECHNICAL FIELD

The present disclosure relates to an electrode for an electrochemical device and an electrochemical device.

BACKGROUND

Electrochemical devices such as lithium ion secondary batteries, lithium ion capacitors, and electric double-layer capacitors have characteristics such as compact size, light weight, high energy-density, and the ability to be repeatedly charged and discharged, and are used in a wide range of applications.

An electrode of an electrochemical device such as a lithium ion secondary battery, for example, typically includes a current collector and an electrode mixed material layer (positive electrode mixed material layer or negative electrode mixed material layer) formed on the current collector. The electrode mixed material layer is formed by applying, on to the current collector, a slurry composition in which an electrode active material, a carbon material serving as a conductive material (conductive carbon material), and a polymer having a role as a binder are dispersed in a solvent, and then drying the slurry composition, for example.

In recent years, attempts have been made to improve members such as electrodes that are used in electrochemical devices in order to achieve further improvement of electrochemical device performance.

As one specific example, Patent Literature (PTL) 1 discloses an electrode for a secondary battery that includes a current collector and an electrode mixed material layer formed using a slurry composition for a secondary battery electrode. The slurry composition for a secondary battery electrode contains an electrode active material, a fibrous carbon nanomaterial, a binder, and a solvent, and the binder includes a first copolymer that includes an alkylene structural unit and a nitrile group-containing monomer unit and that has a weight-average molecular weight of not less than 170,000 and less than 1,500,000. In PTL 1, battery characteristics of a secondary battery are improved by using this electrode for a secondary battery.

CITATION LIST

Patent Literature

PTL 1: WO2017/056488A1

SUMMARY

(Technical Problem)

However, there is room for improvement of the conventional electrode for an electrochemical device described above in terms of increasing flexibility of the electrode and improving output characteristics of an electrochemical device.

Accordingly, one object of the present disclosure is to provide an electrode for an electrochemical device that has excellent flexibility and that can enhance energy density and output characteristics of an electrochemical device.

Another object of the present disclosure is to provide an electrochemical device that has high energy density and excellent output characteristics.

(Solution to Problem)

The inventors conducted diligent investigation with the aim of solving the problems described above. The inventors discovered that by adopting an electrode mixed material layer that contains an electrode active material, a conductive material including a fibrous conductive material, and a polymer having a specific chemical composition and Mooney viscosity and in which the content of the fibrous conductive material and the content of the polymer are specific proportions, the flexibility of an electrode including this electrode mixed material layer improves, and the energy density and output characteristics of an electrochemical device including this electrode are enhanced. In this manner, the inventors completed the present disclosure.

Specifically, the present disclosure aims to advantageously solve the problems set forth above, and a presently disclosed electrode for an electrochemical device comprises an electrode mixed material layer containing an electrode active material, a conductive material, and a binder, wherein the conductive material includes a fibrous conductive material, the electrode mixed material layer contains the fibrous conductive material in a proportion of not less than 0.3 mass% and not more than 1.5 mass%, the binder includes a polymer A that includes a nitrile group-containing monomer unit and an alkylene structural unit and that has a Mooney viscosity ($ML_{1+4}$, 100°C) of not less than 70 and not more than 150, and the electrode mixed material layer contains more than 50 parts by mass and not more than 200 parts by mass of the polymer A per 100 parts by mass of the conductive material. In the case of an electrode for an electrochemical device that includes an electrode mixed material layer containing an electrode active material, a conductive material including a fibrous conductive material, and a binder including a polymer A having a specific chemical composition and Mooney viscosity and in which the fibrous conductive material and the polymer A constitute specific proportions in the electrode mixed material layer in this manner, the electrode for an electrochemical device has excellent flexibility and can be used to obtain an electrochemical device having high energy density and excellent output characteristics.

Note that when a polymer is said to "include a monomer unit" in the present disclosure, this means that a polymer obtained using that monomer includes a repeating unit derived from the monomer.

Also note that the proportional content of a repeating unit (monomer unit or subsequently described structural unit) in a polymer referred to in the present disclosure can be measured by a nuclear magnetic resonance (NMR) method such as $^1$H-NMR or $^{13}$C-NMR.

Moreover, the "Mooney viscosity ($ML_{1+4}$, 100°C)" referred to in the present disclosure can be measured in accordance with JIS K6300-1 at a temperature of 100°C.

Furthermore, the term "fibrous conductive material" as used in the present disclosure refers to a conductive material having an aspect ratio (major axis/minor axis) of normally 10 or more as measured by a transmission electron microscope (TEM).

In the presently disclosed electrode for an electrochemical device, the electrode mixed material layer preferably has a volume resistivity of 50 $\Omega \cdot$cm or less. When the volume resistivity of the electrode mixed material layer is 50 $\Omega \cdot$cm or less, energy density and output characteristics of an electrochemical device can be improved.

Note that the volume resistivity of an electrode mixed material layer referred to in the present disclosure can be measured by a method described in the EXAMPLES section.

In the presently disclosed electrode for an electrochemical device, the electrode mixed material layer preferably contains the binder in a proportion of not less than 0.3 mass% and not more than 2.0 mass%. When the proportional content of the binder in the electrode mixed material layer is within the range set forth above, the electrode mixed material layer can closely adhere strongly to a current collector because binding capacity of the electrode mixed material layer is ensured. In addition, output characteristics of an electrochemical device can be further improved.

In the presently disclosed electrode for an electrochemical device, the binder preferably includes the polymer A in a proportion of 60 mass% or more. When the proportional content of the polymer A in the binder is 60 mass% or more, flexibility of the electrode for an electrochemical device can be further improved.

In the presently disclosed electrode for an electrochemical device, the conductive material may further include either or both of a particulate conductive material and a plate-shaped conductive material. The effects disclosed herein are sufficiently obtained even when the conductive material further includes a particulate conductive material and/or a plate-shape conductive material.

Note that the term "particulate conductive material" as used in the present disclosure refers to a conductive material having an aspect ratio (major axis/minor axis), as measured by a transmission electron microscope, that is normally 1 or more, and is normally less than 10, preferably 5 or less, more preferably 3 or less, and even more preferably 2 or less.

Also note that the term "plate-shaped conductive material" as used in the present disclosure refers to a conductive material having a flattened, flat plate-like, flaked, or scaly shape, for example, and, more specifically, refers to a conductive material having an aspect ratio (major axis/thickness), as measured by a transmission electron microscope, that is preferably 5 or more, and more preferably 10 or more.

In the presently disclosed electrode for an electrochemical device, the conductive material preferably includes the fibrous conductive material and a conductive material other than the fibrous conductive material in a mass ratio of 100:0 to 50:50. When the content ratio of the fibrous conductive material and a conductive material other than the fibrous conductive material in the electrode mixed material layer is within the range set forth above, flexibility of the electrode for an electrochemical device further improves, and binding capacity of the electrode mixed material layer further improves.

Moreover, the present disclosure aims to advantageously solve the problems set forth above, and a presently disclosed electrochemical device comprises any one of the electrodes for an electrochemical device set forth above. An electrochemical device that includes any one of the electrodes set forth above has high energy density and excellent output characteristics.

(Advantageous Effect)

According to the present disclosure, it is possible to provide an electrode for an electrochemical device that has excellent flexibility and that can enhance energy density and output characteristics of an electrochemical device.

Moreover, according to the present disclosure, it is possible to provide an electrochemical device that has high energy density and excellent output characteristics.

DETAILED DESCRIPTION

The following provides a detailed description of embodiments of the present disclosure.

The presently disclosed electrode for an electrochemical device is an electrode that is used as an electrode of an electrochemical device such as a lithium ion secondary battery. Moreover, the presently disclosed electrochemical device is an electrochemical device that includes the presently disclosed electrode for an electrochemical device.

(Electrode for electrochemical device)

The presently disclosed electrode for an electrochemical device includes an electrode mixed material layer. Note that the presently disclosed electrode may have an electrode mixed material layer formed at just one side of a current collector or may have electrode mixed material layers formed at both sides of a current collector, for example.

As a result of the electrode mixed material layer being a specific electrode mixed material layer described below, the presently disclosed electrode for an electrochemical device has excellent flexibility, and energy density and output characteristics of an electrochemical device can be enhanced by using this electrode for an electrochemical device.

<Electrode mixed material layer>

The electrode mixed material layer that is included in presently disclosed electrode for an electrochemical device contains an electrode active material, a conductive material, and a binder and optionally further contains other components.

[Electrode active material]

The electrode active material is a material that gives and receives electrons in an electrode of an electrochemical device. Known electrode active materials that are used in electrochemical devices can be used as the electrode active material without any specific limitations.

Although the following describes, as one example, a case in which the electrode mixed material layer is a positive electrode mixed material layer of a lithium ion secondary battery, the present disclosure is not limited to the following example.

<<Positive electrode active material>>

Examples of positive electrode active materials that can be compounded in a positive electrode mixed material layer of a positive electrode in a lithium ion secondary battery include transition metal-containing compounds. Specifically, a transition metal oxide, a transition metal sulfide, a complex metal oxide of lithium and a transition metal, or the like can be used. Examples of the transition metal include Ti, V, Cr, Mn, Fe, Co, Ni, Cu, and Mo.

More specific examples of positive electrode active materials include, but are not specifically limited to, lithium-containing cobalt oxide ($LiCoO_2$), lithium manganate ($LiMn_2O_4$), lithium-containing nickel oxide ($LiNiO_2$), a lithium-containing complex oxide of Co-Ni-Mn, a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a lithium-rich spinel compound represented by $Li_{1+x}Mn_{2-x}O_4$ (0 < x < 2), $Li[Ni_{0.17}Li_{0.2}Co_{0.07}Mn_{0.56}]O_2$, and $LiNi_{0.5}Mn_{1.5}O_4$.

The particle diameter of the positive electrode active material is not specifically limited and may be the same as that of a conventionally used positive electrode active material. Moreover, one positive electrode active material may be used individually, or two or more positive electrode active materials may be used in combination.

The proportion in which the positive electrode active material is contained in the positive electrode mixed material layer is preferably 90 mass% or more, more preferably 93 mass% or more, and even more preferably 96 mass% or more, and is preferably 99 mass% or less when the overall positive electrode mixed material layer is taken to be 100 mass%.

<Conductive material>

The conductive material is a material for ensuring electrical contact among the electrode active material in the electrode mixed material layer. The electrode mixed material layer that is included in the presently disclosed electrode for an electrochemical device is required to contain a fibrous conductive material as a conductive material. Note that the electrode mixed material layer may optionally contain conductive materials other than the fibrous conductive material (hereinafter, also referred to as "other conductive materials").

<<Fibrous conductive material>>

The fibrous conductive material is dispersed in the presently disclosed electrode for an electrochemical device such that it bridges between the electrode active material in the electrode mixed material layer. This reinforces the electrode mixed material layer, and thus the occurrence of cracks or the like is inhibited, and electrode flexibility improves through the presently disclosed electrode for an electrochemical device. The inclusion of the fibrous conductive material also sufficiently ensures contact among the conductive material in the electrode mixed material layer, thereby enabling formation of good electrical conduction paths in the electrode mixed material layer and improvement of energy density and output characteristics of an electrochemical device.

The fibrous conductive material may be single-walled or multi-walled carbon nanotubes (hereinafter, referred to as "CNTs"), carbon nanohorns, milled carbon fiber, or the like, for example. One of these fibrous conductive materials may be used individually, or two or more of these fibrous conductive materials may be used in combination. Of these fibrous conductive materials, CNTs are preferable.

The BET specific surface area of CNTs that can suitably be used as the fibrous conductive material is preferably 50 $m^2$/g or more, and more preferably 100 $m^2$/g or more, and is preferably 1,000 $m^2$/g or less, more preferably 800 $m^2$/g or less, and even more preferably 500 $m^2$/g or less. When the BET specific surface area of the CNTs is within any of the ranges set forth above, good electrical conduction paths can be formed in the electrode mixed material layer, and output characteristics of an electrochemical device can be further improved.

Note that the term "BET specific surface area" as used in the present disclosure refers to nitrogen adsorption specific surface area measured by the BET method and can be measured in accordance with ASTM D3037-81.

The aforementioned CNTs can be CNTs that have been synthesized by a known CNT synthesis method such as arc discharge, laser ablation, or chemical vapor deposition (CVD) without any specific limitations.

The proportional content of the fibrous conductive material in the electrode mixed material layer is required to be 0.3 mass% or more, and is preferably 0.4 mass% or more, and more preferably 0.5 mass% or more when the overall electrode mixed material layer is taken to be 100 mass%. Moreover, the proportional content of the fibrous conductive material in the electrode mixed material layer is required to be 1.5 mass% or less, and is preferably 1.2 mass% or less when the overall electrode mixed material layer is taken to be 100 mass%. When the proportional content of the fibrous conductive material is within any of the ranges set forth above, even better electrical conduction paths are formed in the electrode mixed material layer, and thus output characteristics of an electrochemical device can be even further improved.

<Other conductive materials>

Known conductive materials that can be compounded in electrodes of electrochemical devices can be used as other conductive materials. For example, a particulate conductive material, a plate-shaped conductive material, or the like may be used as another conductive material. The particulate conductive material may be carbon black (for example, acetylene black, Ketjenblack® (Ketjenblack is a registered trademark in Japan, other countries, or both), or furnace black) or the like, for example. Moreover, the plate-shaped conductive material may be graphene or the like. One of these other conductive materials may be used individually, or two or more of these other conductive materials may be used in combination.

The conductive material preferably includes the fibrous conductive material and other conductive materials in a mass ratio of 100:0 to 50:50, and more preferably 100:0 to 80:20. When the content ratio of the fibrous conductive material and other conductive materials in the conductive material is within any of the ranges set forth above, flexibility of the electrode for an electrochemical device and binding capacity of the electrode mixed material layer are sufficiently good.

<Binder>

The binder is a component that holds components contained in the electrode mixed material layer of the presently disclosed electrode for an electrochemical device such that these components do not detach from the electrode mixed material layer. The binder is required to include a polymer A and may optionally include a polymer B.

<Polymer A>

The polymer A is required to include a nitrile group-containing monomer unit and an alkylene structural unit and may optionally further include repeating units other than the nitrile group-containing monomer unit and the alkylene structural unit (hereinafter, referred to as "other repeating units").

[Nitrile group-containing monomer unit]

The nitrile group-containing monomer unit is a repeating unit that is derived from a nitrile group-containing monomer. As a result of the polymer A including the nitrile group-containing monomer unit, the electrode mixed material layer that is included in the electrode for an electrochemical device displays excellent binding capacity, and the electrode for an electrochemical device displays excellent flexibility.

Examples of nitrile group-containing monomers that can form the nitrile group-containing monomer unit include $\alpha,\beta$-ethylenically unsaturated nitrile monomers. Specifically, any $\alpha,\beta$-ethylenically unsaturated compound that has a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. One of these nitrile group-containing monomers may be used individually, or two or more of these nitrile group-containing monomers may be used in combination. Of these nitrile group-containing monomers, acrylonitrile and methacrylonitrile are preferable from a viewpoint of increasing binding capacity of the electrode mixed material layer, and acrylonitrile is more preferable.

The proportional content of nitrile group-containing monomer units in the polymer A when all repeating units in the polymer A (total of monomer units and structural units) are taken to be 100 mass% is preferably 10 mass% or more, more preferably 20 mass% or more, and even more preferably 30 mass% or more, and is preferably 50 mass% or less, and more preferably 40 mass% or less. When the proportional content of nitrile group-containing monomer units in the polymer A is not less than any of the lower limits set forth above, binding strength of the polymer A can be improved, and binding capacity of the electrode mixed material layer can be sufficiently increased. Moreover, when the proportional content of nitrile group-containing monomer units in the polymer A is not more than any of the upper limits set forth above, flexibility of the polymer A can be increased, and thus flexibility of the electrode for an electrochemical device can be maintained.

[Alkylene structural unit]

The alkylene structural unit is a repeating unit that is composed of only an alkylene structure represented by a general formula $-C_nH_{2n}-$ (n is an integer of 2 or more). As a result of the polymer A including the alkylene structural unit, the electrode for an electrochemical device that includes the electrode mixed material layer containing this polymer A can cause an electrochemical device to display excellent output characteristics.

Although the alkylene structural unit may be linear or branched, the alkylene structural unit is preferably linear (i.e., is preferably a linear alkylene structural unit).

No specific limitations are placed on the method by which the alkylene structural unit is introduced into the polymer. For example, method (1) or (2) described below may be used.

(1) A method in which a polymer is produced from a monomer composition containing a conjugated diene monomer and then the polymer is hydrogenated in order to convert a conjugated diene monomer unit to an alkylene structural unit

(2) A method in which a polymer is produced from a monomer composition containing a 1-olefin monomer

Of these methods, method (1) is preferable in terms of ease of production of the polymer A.

The conjugated diene monomer may be a conjugated diene compound having a carbon number of 4 or more such as 1,3-butadiene, isoprene, 2,3-dimethyl-1,3-butadiene, or 1,3-pentadiene, for example. Of these conjugated diene monomers, 1,3-butadiene is preferable. In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene monomer unit (i.e., is more preferably a hydrogenated 1,3-butadiene unit). Selective hydrogenation of a conjugated diene monomer unit can, for example, be carried out by a commonly known method such as an oil-layer hydrogenation method or a water-layer hydrogenation method.

The 1-olefin monomer may be ethylene, propylene, 1-butene, or the like, for example.

One of these conjugated diene monomers or 1-olefin monomers may be used individually, or two or more of these conjugated diene monomers or 1-olefin monomers may be used in combination.

The proportional content of alkylene structural units in the polymer A when all repeating units in the polymer A (total of monomer units and structural units) are taken to be 100 mass% is preferably 30 mass% or more, more preferably 50 mass% or more, and even more preferably 60 mass% or more, and is preferably 80 mass% or less, more preferably 75 mass% or less, and even more preferably 70 mass% or less.

[Other repeating units]

Examples of other repeating units include repeating units derived from known monomers that are copolymerizable with the above-described monomers without any specific limitations. Specifically, a (meth)acrylic acid ester monomer unit, a hydrophilic group-containing monomer unit, or the like, for example, may be included as another repeating unit. Examples of other repeating units also include aromatic vinyl monomer units derived from aromatic vinyl monomers such as styrene, α-methylstyrene, butoxystyrene, and vinylnaphthalene. One of these monomers may be used individually, or two or more of these monomers may be used in combination. In the present disclosure, "(meth)acryl" is used to indicate "acryl" and/or "methacryl".

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

Examples of hydrophilic group-containing monomers that can form a hydrophilic group-containing monomer unit include polymerizable monomers that have a hydrophilic group. Specific examples of hydrophilic group-containing monomers include carboxy group-containing monomers, sulfo group-containing monomers, phosphate group-containing monomers, and hydroxy group-containing monomers.

Examples of carboxy group-containing monomers include monocarboxylic acids, derivatives of monocarboxylic acids, dicarboxylic acids, acid anhydrides of dicarboxylic acids, and derivatives of these dicarboxylic acids and acid anhydrides.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group through hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid. In the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate. In the present disclosure, "(meth)acryloyl" is used to indicate "acryloyl" and/or "methacryloyl".

Examples of hydroxy group-containing monomers include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula $CH_2=CR^1-COO-(C_qH_{2q}O)_p-H$ (where p represents an integer of 2 to 9, q represents an integer of 2 to 4, and $R^1$ represents a hydrogen atom or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

The proportional content of other repeating units in the polymer A is preferably 40 mass% or less, more preferably 25 mass% or less, even more preferably 10 mass% or less, and particularly preferably 1 mass% or less, and it is most preferable that the polymer A does not include other repeating units. In other words, the polymer A is preferably composed of only nitrile group-containing monomer units and alkylene structural units.

[Mooney viscosity ($ML_{1+4}$, 100°C)]

The Mooney viscosity ($ML_{1+4}$, 100°C) of the polymer A is required to be 70 or more, and is preferably 80 or more, and more preferably 90 or more. Moreover, the Mooney viscosity ($ML_{1+4}$, 100°C) of the polymer A is required to be 150 or less, and is preferably 140 or less, and more preferably 130 or less. When the Mooney viscosity of the polymer A is not less than any of the lower limits set forth above, strength of the polymer A improves, which makes it possible to ensure binding capacity of the electrode mixed material layer and for the electrode mixed material layer to closely adhere strongly to a current collector. Moreover, when the Mooney viscosity of the polymer A is not more than any of the upper limits set forth above, output characteristics of an electrochemical device can be improved.

Note that the Mooney viscosity of the polymer A can be adjusted by altering the chemical composition, structure (for example, linear fraction), molecular weight, and gel content of the polymer A, the production conditions of the polymer A (for example, the used amount of chain transfer agent, the polymerization temperature, and the conversion rate at the end of polymerization), and so forth. In one specific example, increasing the amount of chain transfer agent used in production of the polymer A reduces the Mooney viscosity of the polymer A.

[Production method of polymer A]

No specific limitations are placed on the method by which the polymer A described above is produced. For example, the polymer A can be produced by performing polymerization of a monomer composition containing the above-described monomers, optionally in the presence of a chain transfer agent, to obtain a polymer, and subsequently hydrogenating the obtained polymer.

The proportional content of each monomer in the monomer composition used to produce the polymer A can be set in accordance with the proportional content of each repeating unit in the polymer A.

The polymerization method is not specifically limited and may, for example, be any of solution polymerization, suspension polymerization, bulk polymerization, and emulsion polymerization. Examples of types of polymerization reactions that can be used include ionic polymerization, radical polymerization, living radical polymerization, various types of condensation polymerization, addition polymerization, and so forth.

The hydrogenation method of the polymer is also not specifically limited and may be a typical method using a catalyst (for example, refer to WO2012/165120A1, WO2013/080989A1, and JP2013-8485A).

«Proportional content of polymer A»

The proportional content of the polymer A in the electrode mixed material layer is required to be more than 50 parts by mass, and is more preferably 60 parts by mass or more per 100 parts by mass of the conductive material. Moreover, the proportional content of the polymer A in the electrode mixed material layer is required to be 200 parts by mass or less, and is preferably 150 parts by mass or less, and more preferably 120 parts by mass or less per 100 parts by mass of the conductive material. When the proportional content of the polymer A is not less than any of the lower limits set forth above, binding capacity of the electrode mixed material layer is sufficiently ensured, the electrode mixed material layer can closely adhere to a current collector even more strongly, and internal resistance of an electrochemical device can be reduced. Moreover, when the proportional content of the polymer A is not more than any of the upper limits set forth above, this results in an electrochemical device having better output characteristics. Furthermore, when the proportional content of the polymer A is within any of the ranges set forth above, this results in an electrochemical device having various excellent device characteristics.

(Polymer B)

The polymer B that can be included in the binder is not specifically limited so long as it is a polymer other than the polymer A. For example, the polymer B may be polyacrylonitrile (PAN), polyvinyl alcohol (PVOH), or a fluorine-containing resin such as polyvinylidene fluoride (PVDF), of which, a fluorine-containing resin is preferable. One type of polymer B may be used individually, or two or more types of polymers B may be used in combination.

The proportional content of the binder in the electrode mixed material layer is preferably 0.3 mass% or more, more preferably 0.4 mass% or more, even more preferably 0.5 mass% or more, and particularly preferably 0.55 mass% or more, and is preferably 2.0 mass% or less, more preferably 1.5 mass% or less, and even more preferably 1.2 mass% or less. When the proportional content of the binder is not less than any of the lower limits set forth above, binding capacity of the electrode mixed material layer can be further improved, the electrode mixed material layer can closely adhere to a current collector even more strongly, and flexibility of an electrochemical device can be further improved. In addition, output characteristics of an electrochemical device are even further improved. Moreover, when the proportional content of the binder is not more than any of the upper limits set forth above, output characteristics of an electrochemical device can be further improved.

The proportional content of the polymer A in the binder is preferably 60 mass% or more, and more preferably 80 mass% or more. When the proportional content of the polymer A in the binder is 60 mass% or more, the electrode for an electrochemical device can be provided with sufficiently good flexibility. Moreover, from a viewpoint of sufficiently ensuring flexibility of the electrode for an electrochemical device, the proportional content of the polymer B in the binder is preferably less than 40 mass%, and more preferably less than 20 mass%.

<Other components>

Examples of other components include viscosity modifiers, reinforcing materials, antioxidants, and additives for electrolyte solution having a function of inhibiting electrolyte solution decomposition. Commonly known examples of these components can be used. One of these components may be used individually, or two or more of these components may be used in combination.

[Volume resistivity of electrode mixed material layer]

The volume resistivity of the electrode mixed material layer that is included in the presently disclosed electrode for an electrochemical device is preferably 50 $\Omega\cdot$cm or less, more preferably 40 $\Omega\cdot$cm or less, even more preferably 30 $\Omega\cdot$cm or less, and particularly preferably 25 $\Omega\cdot$cm or less. When the volume resistivity of the electrode mixed material layer is 50 $\Omega\cdot$cm or less, energy density and output characteristics of an electrochemical device can be further improved.

<Production method of electrode for electrochemical device>

No specific limitations are placed on the method by which the presently disclosed electrode for an electrochemical device set forth above is produced. For example, the presently disclosed electrode for an electrochemical device can be produced through a step of producing a conductive material dispersion liquid that contains a conductive material including a fibrous conductive material, the polymer A as a binder, and a dispersion medium and that optionally contains other conductive materials, other components, and the polymer B (dispersion liquid production step), a step of mixing the conductive material dispersion liquid and an electrode active material to produce a slurry for an electrode (slurry production step), a step of applying the slurry for an electrode onto at least one side of a current collector (application step), and a step of drying the slurry for an electrode that has been applied onto at least one side of the current collector to form an electrode mixed material layer on the current collector (drying step). The following describes each of the steps in order.

<<Dispersion liquid production step>>

In the dispersion liquid production step, a conductive material dispersion liquid is produced by mixing a conductive material including a fibrous conductive material, a binder, a dispersion medium, and optionally other conductive materials and so forth. Note that the conductive material dispersion liquid does not normally contain an electrode active material (positive electrode active material or negative electrode active material).

No specific limitations are placed on the method by which the components are mixed. For example, a disper blade, a Homo Mixer, a planetary mixer, a kneader, or a ball mill may be used.

«Slurry production step»

In the slurry production step, a slurry for an electrode is produced by mixing the conductive material dispersion liquid obtained in the dispersion liquid production step described above and an electrode active material. The method of mixing when the conductive material dispersion liquid and the electrode active material are mixed to obtain the slurry for an electrode is not specifically limited and may be performed using a typical mixing device. Moreover, in the slurry production step, an optional component such as the polymer B may be added to the conductive material dispersion liquid in addition to the electrode active material.

«Application step»

In the application step, the slurry for an electrode is applied onto a current collector. The application method is not specifically limited and may be a commonly known method. Specific examples of application methods that can be used include doctor blading, dip coating, reverse roll coating, direct roll coating, gravure coating, extrusion coating, and brush coating. In the application, the slurry for an electrode may be applied onto just one side of the current collector or may be applied onto both sides of the current collector. The thickness of the slurry coating on the current collector after application but before drying may be set as appropriate in accordance with the thickness of the electrode mixed material layer to be obtained after drying.

<<Drying step>>

In the drying step, the slurry for an electrode on the current collector is dried. The drying method is not specifically limited and may be a commonly known method. For example, drying by warm, hot, or low-humidity air; drying in a vacuum; or drying by irradiation with infrared light, electron beams, or the like may be adopted. Through drying of the slurry for an electrode on the current collector in this manner, an electrode mixed material layer can be formed on the current collector to obtain an electrode that includes the current collector and the electrode mixed material layer.
After the drying step, the electrode mixed material layer may be further subjected to a pressing process, such as mold pressing or roll pressing. This pressing process enables good close adherence of the electrode mixed material layer to the current collector.
Note that the method by which the presently disclosed electrode for electrochemical device is produced is not limited to the method described above. For example, the electrode for an electrochemical device may be produced by mixing the above-described components all at once to produce a slurry for an electrode without performing the dispersion liquid production step and the slurry production step described above, and then using the obtained slurry for an electrode to perform the application step and the drying step described above.

(Electrochemical device)

The presently disclosed electrochemical device includes the presently disclosed electrode for an electrochemical device set forth above. Moreover, the presently disclosed electrochemical device has high energy density and excellent output characteristics as a result of including the presently disclosed electrode for an electrochemical device. The presently disclosed electrochemical device may be a non-aqueous secondary battery, for example, and is preferably a lithium ion secondary battery.
Although the following describes, as one example, a case in which the electrochemical device is a lithium ion secondary battery, the present disclosure is not limited to the following example.
A lithium ion secondary battery that is an example of the presently disclosed electrochemical device normally includes a positive electrode, a negative electrode, an electrolyte solution, and a separator, wherein at least one of the positive electrode and the negative electrode is the presently disclosed electrode for an electrochemical device set forth above.

<Electrodes>

Examples of electrodes other than the electrode for an electrochemical device set forth above that can be used in the lithium ion secondary battery that is an example of the presently disclosed electrochemical device include known electrodes without any specific limitations. Specifically, an electrode obtained by forming an electrode mixed material layer on a current collector by a known production method may be used as an electrode other than the electrode for an electrochemical device set forth above.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly

preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), and methyl ethyl carbonate (EMC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate and is, for example, preferably 0.5 mass% to 15 mass%, more preferably 2 mass% to 13 mass%, and even more preferably 5 mass% to 10 mass%. Known additives such as fluoroethylene carbonate and ethyl methyl sulfone may be added to the electrolyte solution.

<Separator>

Examples of separators that can be used include, but are not specifically limited to, those described in JP2012-204303A. Of these separators, a microporous membrane formed of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

<Production method of lithium ion secondary battery>

The lithium ion secondary battery that is an example of the presently disclosed electrochemical device can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like, for example.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Furthermore, in the case of a polymer that is a hydrogenated polymer obtained through hydrogenation of a polymerized product including conjugated diene monomer units, the total proportional content of non-hydrogenated conjugated diene monomer units and alkylene structural units that are hydrogenated conjugated diene monomer units in the hydrogenated polymer is the same as the ratio (charging ratio) of a conjugated diene monomer among all monomers used in polymerization of the polymerized product.

In the examples and comparative examples, the following methods were used to measure or evaluate volume resistivity, flexibility, binding capacity, and output characteristics.

<Volume resistivity>

The volume resistivity ($\Omega \cdot cm$) of a positive electrode mixed material layer was measured for a produced positive electrode in a 25°C environment using an electrode resistance system (RM2610 produced by HIOKI E.E. Corporation).

<Flexibility>

A cylindrical rod made of SUS was placed at the current collector-side of a produced positive electrode, and the positive electrode was wound around the cylindrical rod. This was performed using cylindrical rods of different diameters. The occurrence or absence of cracking in the positive electrode mixed material layer was visually inspected and was evaluated by the following standard.

Winding of the positive electrode around a cylindrical rod of smaller diameter indicates that the positive electrode has better flexibility.

A: Cracking does not occur with diameter of 1.5 mm
B: Cracking does not occur with diameter of 2.0 mm
C: Cracking does not occur with diameter of 2.5 mm
D: Cracking does not occur with diameter of 3.0 mm

<Binding capacity>

A produced positive electrode was cut out as 100 mm in length and 10 mm in width to obtain a test specimen. The test specimen was placed with the surface at which the positive electrode mixed material layer was present facing downward, and cellophane tape (tape in accordance with JIS Z1522) was affixed to the positive electrode surface. One end of the current collector was pulled and peeled off in a perpendicular direction at a peeling speed of 50 mm/min, and the stress during this peeling was measured (note that the cellophane tape was fixed to a test stage). Three measurements were made in this manner. An average value of the measurement results was taken to be the binding strength, and binding capacity was evaluated by the following standard.

A larger binding strength indicates that the positive electrode mixed material layer is closely adhered to the current collector more strongly and has better binding capacity.

A: Binding strength of 15 N/m or more
B: Binding strength of not less than 10 N/m and less than 15 N/m
C: Binding strength of not less than 5 N/m and less than 10 N/m
D: Binding strength of less than 5 N/m

<Output characteristics>

A produced lithium ion secondary battery was constant-current charged at 0.2 CmA until the battery voltage reached 4.2 V and subsequently constant-voltage charged at 4.2 V until the charging current reached 0.02 CmA at 25°C. Next, the lithium ion secondary battery was constant-current discharged at 0.2 CmA until the battery voltage reached 3.0 V. The discharge capacity at this time was defined as $C_{0.2}$. Next, the capacity $C_{2.0}$ during discharge at 2 CmA was determined in the same manner with the exception that discharging was performed at 2 CmA, and output characteristics were evaluated through the following formula.

$$\text{High rate discharge characteristic} = C_{2.0}/C_{0.2} \times 100(\%)$$

A higher value for the high rate discharge characteristic indicates that the lithium ion secondary battery has better output characteristics.

A: High rate discharge characteristic of 85% or more
B: High rate discharge characteristic of not less than 80% and less than 85%
C: High rate discharge characteristic of not less than 75% and less than 80%
D: High rate discharge characteristic of less than 75%

(Example 1)

<Production of polymer A>

A reactor was charged with 180 parts of deionized water, 25 parts of sodium dodecylbenzenesulfonate aqueous solution (concentration 10%) as an emulsifier, 35 parts of acrylonitrile as a nitrile group-containing monomer, and 0.25 parts of t-dodecyl mercaptan as a chain transfer agent in this order. Next, gas inside of the reactor was purged three times with nitrogen, and then 65 parts of 1,3-butadiene was added as a conjugated diene monomer. The reactor was held at 10°C while 0.1 parts of cumene hydroperoxide as a polymerization initiator and appropriate amounts of a reductant and a chelating agent were added so as to initiate a polymerization reaction that was caused to proceed under stirring.

At the point at which the polymerization conversion rate reached 85%, 0.1 parts of hydroquinone aqueous solution (concentration 10%) was added as a polymerization inhibitor to stop the polymerization reaction. Next, residual monomer was removed at a water temperature of 80°C to yield a water dispersion of a polymer precursor.

The water dispersion of the polymer precursor and palladium catalyst (solution obtained through mixing of 1% palladium acetate acetone solution and an equivalent amount of deionized water) were added into an autoclave such that the palladium content was 5,000 ppm relative to the weight of solid content contained in the obtained water dispersion of the polymer precursor. A hydrogenation reaction was performed at a hydrogen pressure of 3 MPa and a temperature of 50°C for 6 hours to yield a water dispersion of a polymer A.

The obtained water dispersion of the polymer A was mixed with an appropriate amount of NMP as an organic solvent. Next, water contained in the resultant mixture was completely evaporated under reduced pressure to yield an NMP solution of the polymer A having a solid content concentration of 6%.

<Production of conductive material dispersion liquid>

A mixing vessel was charged with 3 parts of multi-walled CNTs (hereinafter, also referred to as "MWCNTs") having a BET specific surface area of 250 m²/g, which are a fibrous conductive material, as a conductive material, 50 parts (equivalent to 3 parts as solid content) of the NMP solution of the polymer A obtained as described above, and 47 parts of NMP as an organic solvent and was stirred using a disper blade (3,000 rpm, 10 minutes). The resultant mixture was then dispersed at a circumferential speed of 8 m/s for 1 hour using a bead mill in which zirconia beads of 1 mm in diameter were used so as to produce a conductive material dispersion liquid.

<Production of slurry for positive electrode>

Next, 98.4 parts of a ternary active material having a layered structure ($LiNi_{0.8}Co_{0.1}Mn_{0.1}O_2$; average particle diameter: 10 $\mu$m) as a positive electrode active material, 26.7 parts of the conductive material dispersion liquid produced as described above, and NMP were loaded into a vessel and were mixed by a planetary mixer (60 rpm, 30 minutes) so as to produce a slurry for a positive electrode. Note that the additive amount of NMP was adjusted such that the viscosity of the obtained slurry for a positive electrode was within a range of 3,500 mPa·s to 4,500 mPa·s. The viscosity of the slurry for a positive electrode was measured in accordance with JIS Z8803: 1991 by a single-cylinder rotational viscometer. During this viscosity measurement, the temperature was 25°C and the rotation speed was 60 rpm.

<Production of positive electrode>

The obtained slurry for a positive electrode was applied onto aluminum foil (thickness 20 $\mu$m) serving as a current collector by a comma coater such as to have a coating weight after drying of 21 mg/cm², and was dried at 120°C for 20 minutes and at 130°C for 20 minutes. Thereafter, 10 hours of heat treatment was performed at 60°C to obtain a positive electrode web. The positive electrode web was rolled by roll pressing to produce a sheet-shaped positive electrode including the aluminum foil and a positive electrode mixed material layer of 3.4 g/cm³ in density. Note that the thickness of the sheet-shaped positive electrode was 61 $\mu$m. The sheet-shaped positive electrode was cut to 4.8 cm in width and 50 cm in length to obtain a positive electrode for a lithium ion secondary battery.

The obtained positive electrode was used to measure volume resistivity and to evaluate flexibility and binding capacity. The results are shown in Table 1.

<Production of negative electrode>

A 5 MPa pressure-resistant vessel equipped with a stirrer was charged with 33 parts of 1,3-butadiene as an aliphatic conjugated diene monomer, 3.5 parts of itaconic acid as a carboxy group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C so as to initiate polymerization. The polymerization reaction was quenched by cooling at the point at which the polymerization conversion rate reached 96% to yield a mixture containing a particulate binder (styrene-butadiene copolymer). The mixture was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing a binder for a negative electrode.

Next, 48.75 parts of artificial graphite and 48.75 parts of natural graphite as negative electrode active materials and 1 part of carboxymethyl cellulose as a thickener were loaded into a planetary mixer. These materials were diluted to a solid content concentration of 60% with deionized water and were then kneaded at a rotation speed of 45 rpm for 60 minutes. Thereafter, 1.5 parts in terms of solid content of the water dispersion containing the binder for a negative electrode that was obtained as described above was added and kneaded therewith at a rotation speed of 40 rpm for 40 minutes. The viscosity was adjusted to 3,000 ± 500 mPa·s (measured by B-type viscometer at 25°C and 60 rpm) through addition of deionized water to produce a slurry composition for a negative electrode mixed material layer.

Next, copper foil of 15 μm in thickness was prepared as a current collector. The slurry composition for a negative electrode mixed material layer was applied onto both sides of the copper foil such that the coating weight after drying at each side was 10 mg/cm$^2$, and was dried at 60°C for 20 minutes and at 120°C for 20 minutes. Thereafter, 2 hours of heat treatment was performed at 150°C to obtain a negative electrode web. The negative electrode web was rolled by roll pressing to produce a sheet-shaped negative electrode including the copper foil and negative electrode mixed material layers (both sides) of 1.6 g/cm$^3$ in density. The sheet-shaped negative electrode was cut to 5.0 cm in width and 52 cm in length to obtain a negative electrode for a lithium ion secondary battery.

<Production of lithium ion secondary battery>

The produced positive electrode for a lithium ion secondary battery and negative electrode for a lithium ion secondary battery were wound up with the respective electrode mixed material layers thereof facing each other and with a separator (microporous membrane made of polyethylene) of 15 μm in thickness interposed therebetween using a core of 20 mm in diameter so as to obtain a roll. The obtained roll was compressed to a thickness of 4.5 mm from one direction at a rate of 10 mm/s. Note that the compressed roll had an elliptical shape in plan view, and the ratio of the major axis to the minor axis (major axis/minor axis) was 7.7.

In addition, a LiPF$_6$ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was prepared as an electrolyte solution.

Thereafter, the compressed roll was housed inside a laminate case made of aluminum together with 3.2 g of the non-aqueous electrolyte solution. After connecting a nickel lead at a specific location on the negative electrode and connecting an aluminum lead at a specific location on the positive electrode, an opening of the case was heat sealed to obtain a lithium ion secondary battery. This lithium ion secondary battery had a pouch shape of a specific size capable of housing the above-described roll. The nominal capacity of the battery was 700 mAh.

Output characteristics were evaluated for the obtained lithium ion secondary battery. The results are shown in Table 1.

(Example 2)

In production of the slurry for a positive electrode, the positive electrode active material was changed to lithium iron phosphate (average particle diameter: 0.8 μm) and the amount of the conductive material dispersion liquid was changed to 36.7 parts. Moreover, in production of the positive electrode, the slurry for a positive electrode was applied such as to have a coating weight after drying of 22 mg/cm$^2$, and rolling by roll pressing was performed such that the density of the positive electrode mixed material layer was 2.4 g/cm$^3$. With the exception of the above, a polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1. The results are shown in Table 1.

(Example 3)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the amount of the NMP solution of the polymer A was changed to 31.2 parts (equivalent to 1.9 parts by mass as solid content) and the amount of NMP was changed to 65.8 parts in production of the conductive material dispersion liquid and that the amount of the positive electrode active material was changed to 98.7 parts in production of the slurry for a positive electrode. The results are shown in Table 1.

(Example 4)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the amount of the NMP solution of the polymer A was changed to 28.3 parts (equivalent to 1.7 parts as solid content) and the amount of NMP was changed to 68.7 parts in production of the conductive material dispersion liquid and that the amount of the positive electrode active material was changed to 98.75 parts in production of the slurry for a positive electrode. The results are shown in Table 1.

(Example 5)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the amount of the NMP solution of the polymer A was changed to 62.5 parts (equivalent to 3.75 parts as solid content) and the amount of NMP was changed to 34.5 parts in production of the conductive material dispersion liquid and that the amount of the positive electrode active material was changed to 98.2 parts in production of the slurry for a positive electrode. The results are shown in Table 1.

(Example 6)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the amount of the NMP solution of the polymer A was changed to 81.25 parts (equivalent to 4.87 parts as solid content) and the amount of NMP was changed to 15.75 parts in production of the conductive material dispersion liquid and that the amount of the positive electrode active material was changed to 97.9 parts in production of the slurry for a positive electrode. The results are shown in Table 1.

(Example 7)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the amount of the positive electrode active material was changed to 99.1 parts and the amount of the conductive material dispersion liquid was changed to 13.35 parts in production of the slurry for a positive electrode. The results are shown in Table 1.

(Example 8)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the amount of the positive electrode active material was changed to 99.3 parts and the amount of the conductive material dispersion liquid was changed to 11.68 parts in production of the slurry for a positive electrode. The results are shown in Table 1.

(Example 9)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the amount of t-dodecyl mercaptan was changed to 0.35 parts in production of the polymer A. The results are shown in Table 1.

(Example 10)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the amount of t-dodecyl mercaptan was changed to 0.4 parts in production of the polymer A. The results are shown in Table 1.

(Example 11)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the amount of t-dodecyl mercaptan was changed to 0.2 parts in production of the polymer A. The results are shown in Table 2.

(Example 12)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the amount of t-dodecyl mercaptan was changed to 0.15 parts in production of the polymer A. The results are shown in Table 1.

(Example 13)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the conductive material dispersion liquid produced in Example 3 was used, the amount of the positive electrode active material was changed to 98.6 parts, and 0.1 parts of polyvinylidene fluoride (PVdF) was further added as a polymer B. The results are shown in Table 1.

(Example 14)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the conductive material dispersion liquid produced in Example 3 was used, the amount of the positive electrode active material was changed to 98.4 parts, and 0.3 parts of PVdF was further added as a polymer B. The results are shown in Table 1.

(Example 15)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the fibrous conductive material was changed to 2.25 parts of MWCNTs (BET specific surface area: 250 $m^2/g$) and 0.75 parts of acetylene black (BET specific surface area: 39 $m^2/g$) was further added as a particulate conductive material in production of the conductive material dispersion liquid. The results are shown in Table 1.

(Example 16)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the amount of MWCNTs as a fibrous conductive material used in production of the conductive material dispersion liquid in Example 15 was changed to 1.69 parts and the amount of acetylene black as a particulate conductive material used in production of the conductive material dispersion liquid in Example 15 was changed to 1.31 parts. The results are shown in Table 1.

(Example 17)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that the conductive material dispersion liquid was not produced and that the slurry for a positive electrode was produced by loading 98.4 parts of a ternary active material having a layered structure ($LiNi_{0.8}Co_{0.1}Mn_{0.1}O_2$, average particle diameter: 10 $\mu$m) as a positive electrode active material, 3 parts of MWCNTs (BET specific surface area: 250 $m^2/g$) as a fibrous conductive material, and 26.7 parts of the conductive material dispersion liquid produced in Example 1 into a vessel and mixing these materials using a planetary mixer (60 rpm, 30 minutes). The results are shown in Table 1.

(Comparative Example 1)

A polymer A, a conductive material dispersion liquid, a slurry for a positive electrode, a positive electrode, a negative electrode, and a lithium ion secondary battery were produced in the same way as in Example 1 and measurements and evaluations were performed in the same way as in Example 1 with the exception that 7.5 parts of acetylene black (BET specific surface area: 39 $m^2/g$), which is a particulate conductive material, was used as the conductive material in production of the conductive material dispersion liquid in Example 1 and that the amount of the positive electrode active material was changed to 97.2 parts and the amount of the conductive material dispersion liquid was changed to 26.7 parts in production of the slurry for a positive electrode. The results are shown in Table 3.

(Comparative Example 2)

Production of a polymer A, a conductive material dispersion liquid, a slurry for a positive electrode, a positive electrode, a negative electrode, and a lithium ion secondary battery was attempted in the same way as in Example 1 with the exception that the NMP solution of the polymer A was changed to 12.5 parts (equivalent to 0.75 parts as solid content) in production of the conductive material dispersion liquid and that the amount of the positive electrode active material was changed to 99 parts in production of the slurry for a positive electrode. However, a positive electrode could not be produced due to sedimentation of the slurry for a positive electrode.

(Comparative Example 3)

A polymer A, a conductive material dispersion liquid, a slurry for a positive electrode, a positive electrode, a negative electrode, and a lithium ion secondary battery were produced in the same way as in Comparative Example 2 and measurements and evaluations were performed in the same way as in Example 1 with the exception that the amount of the positive electrode active material was changed to 98 parts and 1 part of polyvinylidene fluoride (PVdF) was further added as a polymer B in production of the slurry for a positive electrode. The results are shown in Table 1.

(Comparative Example 4)

Production of a polymer A, a conductive material dispersion liquid, a slurry for a positive electrode, a positive electrode, a negative electrode, and a lithium ion secondary battery was attempted in the same way as in Example 1 with the exception that the amount of t-dodecyl mercaptan was changed to 0.5 parts in production of the polymer A. However, a positive electrode could not be produced due to sedimentation of the slurry for a positive electrode.

In Tables 1 to 3, shown below:

"NCM811" indicates ternary active material ($LiNi_{0.8}Co_{0.1}Mn_{0.1}O_2$);
"LFP" indicates lithium iron phosphate;
"CNT" indicates carbon nanotubes;
"AceB" indicates acetylene black; and
"PVdF" indicates polyvinylidene fluoride.

[Table 1]

Table 1

| | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Positive electrode mixed material layer | Positive electrode active material | | Type | NCM811 | LFP | NCM811 | NCM811 | NCM811 | NCM811 | NCM811 | NCM811 | NCM811 | NCM811 |
| | | | Content [parts by mass] | 98.4 | 97.8 | 98.7 | 98.75 | 98.2 | 97.9 | 99.1 | 99.3 | 98.4 | 98.4 |
| | Conductive material | Fibrous conductive material | Type | CNT | CNT | CNT | CNT | CNT | CNT | CNT | CNT | CNT | CNT |
| | | | Content [mass%] | 0.8 | 1.1 | 0.8 | 0.8 | 0.8 | 0.8 | 0.45 | 0.35 | 0.8 | 0.8 |
| | | Other conductive material | Type | - | - | - | - | - | - | - | - | - | - |
| | | | Content [mass%] | - | - | - | - | - | - | - | - | - | - |
| | | Content ratio of fibrous conductive material and other conductive material (fibrous conductive material/other conductive material) [-] | | 100/0 | 100/0 | 100/0 | 100/0 | 100/0 | 100/0 | 100/0 | 100/0 | 100/0 | 100/0 |
| | Binder | Polymer A | Chemical composition | Acrylonitrile units [mass%] | 35 | 35 | 35 | 35 | 35 | 35 | 35 | 35 | 35 | 35 |
| | | | | 1,3-Butadiene units + Hydrogenated 1,3-butadiene units [mass%] | 65 | 65 | 65 | 65 | 65 | 65 | 65 | 65 | 65 | 65 |
| | | | Mooney viscosity [-] | 120 | 120 | 120 | 120 | 120 | 120 | 120 | 120 | 85 | 73 |
| | | | Content [mass%] | 0.8 | 1.1 | 0.5 | 0.45 | 1 | 1.3 | 0.45 | 0.35 | 0.8 | 0.8 |
| | | | Amount of polymer A per 100 parts by mass of conductive material [parts by mass] | 100 | 100 | 63 | 56 | 125 | 163 | 100 | 100 | 100 | 100 |
| | | Polymer B | Type | - | - | - | - | - | - | - | - | - | - |
| | | | Content [mass%] | - | - | - | - | - | - | - | - | - | - |
| | | Proportion of polymer A in binder [mass%] | | 100 | 100 | 100 | 100 | 100 | 100 | 100 | 100 | 100 | 100 |
| | | Content of binder [mass%] | | 0.8 | 1.1 | 0.5 | 0.45 | 1 | 1.3 | 0.45 | 0.35 | 0.8 | 0.8 |

EP 4 254 561 A1

(continued)

|  | Example 1 | Example 2 | Example 3 | Example 4 | Example 5 | Example 6 | Example 7 | Example 8 | Example 9 | Example 10 |
|---|---|---|---|---|---|---|---|---|---|---|
| Volume resistivity [Ω·cm] | 21 | 25 | 23 | 28 | 29 | 33 | 35 | 38 | 23 | 24 |
| Flexibility | A | A | A | B | A | A | B | C | A | A |
| Binding capacity | A | A | B | C | A | A | C | C | B | C |
| Output characteristics | A | A | A | B | B | C | C | C | A | A |

[Table 2]

Table 2

| | | | | Example 11 | Example 12 | Example 13 | Example 14 | Example 15 | Example 16 | Example 17 |
|---|---|---|---|---|---|---|---|---|---|---|
| Positive electrode mixed material layer | Positive electrode active material | | Type | NCM811 | NCM811 | NCM811 | NCM811 | NCM811 | NCM811 | NCM811 |
| | | | Content [parts by mass] | 98.4 | 98.4 | 98.6 | 98.4 | 98.6 | 98.75 | 98.4 |
| | Conductive material | Fibrous conductive material | Type | CNT | CNT | CNT | CNT | CNT | CNT | CNT |
| | | | Content [mass%] | 0.8 | 0.8 | 0.8 | 0.8 | 0.6 | 0.45 | 0.8 |
| | | Other conductive material | Type | - | - | - | - | AceB | AceB | - |
| | | | Content [mass%] | - | - | - | - | 0.2 | 0.35 | - |
| | | Content ratio of fibrous conductive material and other conductive material (fibrous conductive material/other conductive material) [-] | | 100/0 | 100/0 | 100/0 | 100/0 | 75/25 | 56/44 | 100/0 |
| | Binder | Polymer A | Chemical composition | Acrylonitrile units [mass%] | 35 | 35 | 35 | 35 | 35 | 35 | 35 |
| | | | | 1,3-Butadiene units + Hydrogenated 1,3-butadiene units [mass%] | 65 | 65 | 65 | 65 | 65 | 65 | 65 |
| | | | Mooney viscosity [-] | 133 | 145 | 120 | 120 | 120 | 120 | 120 |
| | | | Content [mass%] | 0.8 | 0.8 | 0.5 | 0.5 | 0.8 | 0.8 | 0.8 |
| | | | Amount of polymer A per 100 parts by mass of conductive material [parts by mass] | 100 | 100 | 63 | 63 | 100 | 100 | 100 |
| | | Polymer B | Type | - | - | PVdF | PVdF | - | - | - |
| | | | Content [mass%] | - | - | 0.1 | 0.3 | - | - | - |
| | | Proportion of polymer A in binder [mass%] | | 100 | 100 | 83 | 63 | 100 | 100 | 100 |
| | | Content of binder [mass%] | | 0.8 | 0.8 | 0.6 | 0.8 | 0.8 | 0.8 | 0.8 |

(continued)

| | Example 11 | Example 12 | Example 13 | Example 14 | Example 15 | Example 16 | Example 17 |
|---|---|---|---|---|---|---|---|
| Volume resistivity [$\Omega \cdot$cm] | 28 | 32 | 24 | 25 | 29 | 35 | 48 |
| Flexibility | A | A | B | C | A | B | C |
| Binding capacity | A | A | B | B | B | C | A |
| Output characteristics | B | C | A | A | B | C | D |

[Table 3]

[Table 3]

Table 3

| | | | | Comparative Example 1 | Comparative Example 2 | Comparative Example 3 | Comparative Example 4 |
|---|---|---|---|---|---|---|---|
| Positive electrode mixed material layer | Positive electrode active material | | Type | NCM811 | NCM811 | NCM811 | NCM811 |
| | | | Content [parts by mass] | 97.2 | 99 | 98 | 98.4 |
| | Conductive material | Fibrous conductive material | Type | - | CNT | CNT | CNT |
| | | | Content [mass%] | - | 0.8 | 0.8 | 0.8 |
| | | Other conductive material | Type | AceB | - | - | - |
| | | | Content [mass%] | 2 | - | - | - |
| | | Content ratio of fibrous conductive material and other conductive material (fibrous conductive material/other conductive material) [-] | | 0/100 | 100/0 | 100/0 | 100/0 |
| | Binder | Polymer A | Chemical composition | Acrylonitrile units [mass%] | 35 | 35 | 35 | 35 |
| | | | | 1,3-Butadiene units + Hydrogenated 1,3-butadiene units [mass%] | 65 | 65 | 65 | 65 |
| | | | Mooney viscosity [-] | 120 | 120 | 120 | 55 |
| | | | Content [mass%] | 0.8 | 0.2 | 0.2 | 0.8 |
| | | | Amount of polymer A per 100 parts by mass of conductive material [parts by mass] | 40 | 25 | 25 | 100 |
| | | Polymer B | Type | - | - | PVDF | - |
| | | | Content [mass%] | - | - | 1 | - |
| | | Proportion of polymer A in binder [mass%] | | 100 | 100 | 17 | 100 |
| | | Content of binder [mass%] | | 0.8 | 0.2 | 1.2 | 0.8 |

EP 4 254 561 A1

24

(continued)

| | Comparative Example 1 | Comparative Example 2 | Comparative Example 3 | Comparative Example 4 |
|---|---|---|---|---|
| Volume resistivity [$\Omega \cdot cm$] | 58 | Electrode cannot be produced due to sedimentation of slurry | 51 | Electrode cannot be produced due to sedimentation of slurry |
| Flexibility | C | | D | |
| Binding capacity | C | | A | |
| Output characteristics | D | | B | |

The following can be seen from Tables 1 to 3.

Examples 1 to 17 demonstrate that when using a positive electrode that contains a fibrous conductive material and a polymer A having a specific chemical composition and Mooney viscosity in specific proportions in a positive electrode mixed material layer, the positive electrode has good flexibility, and a lithium ion secondary battery has high energy density and can display excellent output characteristics.

Moreover, Comparative Example 1 demonstrates that output characteristics of a lithium ion secondary battery deteriorate in a situation in which the used positive electrode does not contain a fibrous conductive material in a positive electrode mixed material layer.

Furthermore, Comparative Example 2 demonstrates that a positive electrode cannot be produced in a situation in which the used positive electrode does not contain the polymer A in a specific proportion in a positive electrode mixed material layer. Also, Comparative Example 3 demonstrates that flexibility of an obtained positive electrode decreases in a situation in which the positive electrode does not contain the polymer A in a specific proportion in a positive electrode mixed material layer even when a polymer B is contained in the positive electrode mixed material layer.

Moreover, Comparative Example 4 demonstrates that a positive electrode cannot be produced in a situation in which a polymer A in a positive electrode mixed material layer of the positive electrode does not have a specific Mooney viscosity.

INDUSTRIAL APPLICABILITY

According to the present disclosure, it is possible to provide an electrode for an electrochemical device that has excellent flexibility and that can enhance energy density and output characteristics of an electrochemical device.

Moreover, according to the present disclosure, it is possible to provide an electrochemical device that has high energy density and excellent output characteristics.

**Claims**

1. An electrode for an electrochemical device comprising an electrode mixed material layer containing an electrode active material, a conductive material, and a binder, wherein

   the conductive material includes a fibrous conductive material,
   the electrode mixed material layer contains the fibrous conductive material in a proportion of not less than 0.3 mass% and not more than 1.5 mass%,
   the binder includes a polymer A that includes a nitrile group-containing monomer unit and an alkylene structural unit and that has a Mooney viscosity ($ML_{1+4}$, 100°C) of not less than 70 and not more than 150, and
   the electrode mixed material layer contains more than 50 parts by mass and not more than 200 parts by mass of the polymer A per 100 parts by mass of the conductive material.

2. The electrode for an electrochemical device according to claim 1, wherein the electrode mixed material layer has a volume resistivity of 50 Ω·cm or less.

3. The electrode for an electrochemical device according to claim 1 or 2, wherein the electrode mixed material layer contains the binder in a proportion of not less than 0.3 mass% and not more than 2.0 mass%.

4. The electrode for an electrochemical device according to any one of claims 1 to 3, wherein the binder includes the polymer A in a proportion of 60 mass% or more.

5. The electrode for an electrochemical device according to any one of claims 1 to 4, wherein the conductive material further includes either or both of a particulate conductive material and a plate-shaped conductive material.

6. The electrode for an electrochemical device according to any one of claims 1 to 5, wherein the conductive material includes the fibrous conductive material and a conductive material other than the fibrous conductive material in a mass ratio of 100:0 to 50:50.

7. An electrochemical device comprising the electrode for an electrochemical device according to any one of claims 1 to 6.

## INTERNATIONAL SEARCH REPORT

| | International application No. |
|---|---|
| | **PCT/JP2021/040867** |

**A.    CLASSIFICATION OF SUBJECT MATTER**

*H01M 4/62*(2006.01)i; *H01G 11/06*(2013.01)i; *H01G 11/38*(2013.01)i; *H01G 11/40*(2013.01)i; *H01M 4/13*(2010.01)i
FI:   H01M4/62 Z; H01M4/13; H01G11/06; H01G11/40; H01G11/38

According to International Patent Classification (IPC) or to both national classification and IPC

**B.    FIELDS SEARCHED**

Minimum documentation searched (classification system followed by classification symbols)

H01M4/62; H01G11/06; H01G11/38; H01G11/40; H01M4/13

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C.    DOCUMENTS CONSIDERED TO BE RELEVANT**

| Category* | Citation of document, with indication, where appropriate, of the relevant passages | Relevant to claim No. |
|---|---|---|
| X | WO 2018/123624 A1 (ZEON CORP) 05 July 2018 (2018-07-05) claims, paragraphs [0049], [0058]-[0061], examples 1-6, 8-10 | 1-5, 7 |
| Y | claims, paragraphs [0049], [0058]-[0061], examples 1-6, 8-10 | 6 |
| Y | WO 2017/056488 A1 (ZEON CORP) 06 April 2017 (2017-04-06) paragraphs [0067]-[0072], example 1 | 6 |
| A | WO 2017/010093 A1 (ZEON CORP) 19 January 2017 (2017-01-19) | 1-7 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 November 2021** | **14 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/040867**

| Patent document cited in search report | | | Publication date (day/month/year) | Patent family member(s) | | | Publication date (day/month/year) |
|---|---|---|---|---|---|---|---|
| WO | 2018/123624 | A1 | 05 July 2018 | US | 2019/0348681 | A1 | |
| | | | | claims, paragraphs [0081]-[0083], [0096]-[0102], examples 1-6, 8-10 | | | |
| | | | | EP | 3565033 | A1 | |
| | | | | CN | 110088947 | A | |
| | | | | KR | 10-2019-0097048 | A | |
| WO | 2017/056488 | A1 | 06 April 2017 | US | 2018/0277848 | A1 | |
| | | | | paragraphs [0131]-[0146], example 1 | | | |
| | | | | EP | 3358651 | A1 | |
| | | | | CN | 108028358 | A | |
| | | | | KR | 10-2018-0063065 | A | |
| WO | 2017/010093 | A1 | 19 January 2017 | US | 2018/0198126 | A1 | |
| | | | | EP | 3324468 | A1 | |
| | | | | KR | 10-2018-0005259 | A | |
| | | | | CN | 107710472 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017056488 A1
- WO 2012165120 A1
- WO 2013080989 A1
- JP 2013008485 A
- JP 2012204303 A